# EUROPÄISCHE PATENTSCHRIFT

(11) **EP 4 150 244 B1**
(45) Veröffentlichungstag und Bekanntmachung des Hinweises auf die Patenterteilung: **14.05.2025**
(21) Anmeldenummer: 21772713.0
(22) Anmeldetag: 30.08.2021
(51) Int. Cl.: F17C 5/00, F17C 5/06

(54) **TANK-KONTROLL-EINHEIT EINES WASSERSTOFFSPEICHERS, WASSERSTOFFSPEICHER MIT TANK-KONTROLL-EINHEIT UND ZUGEHÖRIGES VERFAHREN**
TANK CONTROL UNIT OF A HYDROGEN RESERVOIR, HYDROGEN RESERVOIR WITH TANK CONTROL UNIT, AND ASSOCIATED METHOD
UNITÉ DE COMMANDE DE RÉSERVOIR D'UN RÉSERVOIR D'HYDROGÈNE, RÉSERVOIR D'HYDROGÈNE MUNI D'UNE UNITÉ DE COMMANDE DE RÉSERVOIR ET PROCÉDÉ ASSOCIÉ

(30) Priorität: 25.11.2020 DE 102020131164
(43) Veröffentlichungstag der Anmeldung: 22.03.2023
(73) Patentinhaber: Marquardt GmbH, 78604 Rietheim-Weilheim (DE)
(72) Erfinder: DIETZEL, Sebastian, 78549 Spaichingen (DE)
(74) Vertreter: Staeger & Sperling Partnerschaftsgesellschaft mbB
(86) Internationale Anmeldenummer: PCT/EP2021/073844
(87) Internationale Veröffentlichungsnummer: WO 2022/111872

(56) Entgegenhaltungen:
- DE-A1- 102012 010 174
- JP-A- 2003 130 291
- JP-A- 2014 122 694
- JP-A- 2019 102 288
- KR-A- 20140 142 404
- US-A- 5 794 666

## Beschreibung

Die Erfindung betrifft eine Tank-Kontroll-Einheit eines Wasserstoffspeichers für ein Brennstoffzellensystem, einen Wasserstoffspeicher mit einer solchen Tank-Kontroll-Einheit sowie ein zugehöriges Verfahren.

Im Stand der Technik sind bereits Wasserstoffspeicher sowie zugehörige Tank-Kontroll-Einheiten bekannt, welche jedoch meist lediglich darauf ausgelegt sind, die Drücke und Temperaturen bei einem Betankungsvorgang des Wasserstoffspeichers und die Drücke und Temperaturen in dem Wasserstoffspeicher selbst sowie den Volumenstrom des Wasserstoffs in und aus dem Wasserstoffspeicher zu kontrollieren.

Aufgrund teils mangelhafter Qualität des zugeführten oder in dem Wasserstoffspeicher gespeicherten Wasserstoffs, können in den Wasserstoffspeicher jedoch Schadstoffe bzw. Schadgase eingeführt und anschließend beispielsweise in eine Brennstoffzelle transportiert werden, durch welche der Wasserstoffspeicher an sich oder eine durch den Wasserstoffspeicher mit Wasserstoff versorgte Brennstoffzelle geschädigt werden können.

Tank-Kontroll-Einheiten für Wasserstoffspeicher bzw. Aspekte solcher Tank-Kontroll-Einheiten sind im Stand der Technik beispielsweise durch die Schriften DE 10 2012 010 174 A1, JP 2014 122 694 A, JP 2019 102 288 A, JP 2003 130 291 A, KR 10 2014 0142404 A und US 5 794 666 A offenbart.

Der Erfindung liegt deshalb die Aufgabe zugrunde, die vorgenannten Nachteile zu überwinden und eine Schadstofferkennung in und an dem Wasserstoffspeicher zu ermöglichen, so dass abhängig von der Schadstofferkennung ein Betankungsvorgang, ein Transport des Wasserstoffs zu einem Brennstoffzellensystem sowie der Wasserstoffspeicher selbst gesteuert und vor Schaden geschützt werden können.

Diese Aufgabe wird durch die Merkmalskombination gemäß Patentanspruch 1 gelöst.

Erfindungsgemäß wird eine Tank-Kontroll-Einheit eines Wasserstoffspeichers für ein Brennstoffzellensystem gemäß den Merkmalen des Hauptanspruchs vorgeschlagen. Der Wasserstoffspeicher selbst ist dabei zumindest gemäß dem ersten Aspekt der Erfindung nicht Teil der Tank-Kontroll-Einheit, wobei sich Komponenten der Tank-Kontroll-Einheit mit in den Wasserstoffspeicher oder in ein den Wasserstoffspeicher umfassendes Wasserstoffspeichersystem integriert sein können. Die Tank-Kontroll-Einheit weist eine Auswerteeinheit und zumindest eine Messvorrichtung zur Erfassung vorbestimmter Komponenten und insbesondere Schadstoffe eines in dem Wasserstoffspeicher gespeicherten und/oder in den Wasserstoffspeicher einströmenden und/oder aus dem Wasserstoffspeicher ausströmenden Wasserstoffs auf. Dabei kann der Wasserstoffspeicher auch mehrere Tanks zur Speicherung des Wasserstoffs aufweisen, welche zu dem Wasserstoffspeicher zusammengeschalten sind. Ist das der Fall, kann jeweils eine Messvorrichtung für jeden Tank oder eine Messvorrichtung für alle Tanks gemeinsam vorgesehen sein. Bei den Komponenten, welche durch die Messvorrichtung erfasst werden können, handelt es sich um die Schadgase oder allgemein Schadstoffe in dem Wasserstoff, so dass die Messvorrichtung auch als Schadstoff-Messvorrichtung bezeichnet werden kann. Solche Komponenten bzw. Schadstoffe oder -gase können beispielsweise Kohlenmonoxid (CO), Schwefelspezies (Schwefelwasserstoff H₂S, Carbonylsulfid COS), Halogenverbindungen (Chlormethan H₃CCl, Trichlormethan HCCl₃), Kohlenwasserstoffe (Toluol C₇H₈), Ameisensäure (HCOOH), Formaldehyd (HCHO) und Mischungen mit zum Teil Anteilen an Stickstoff bzw. Sauerstoff sein. Entsprechend kann beispielsweise eine Schadstoff-Messvorrichtung ausgebildet sein, mehrere der Schadstoffe oder einen spezifischen Schadstoff zu erfassen, so dass ein oder mehrere Schadstoff-Messvorrichtungen vorgesehen sein können um die Anteile der vorbestimmten Komponenten bzw. Schadstoffe ermittelt zu können. Zur Verarbeitung bzw. Meldung der Messewerte der Schadstoff-Messvorrichtung(en) weist die Auswerteeinheit eine Kommunikationsschnittstelle auf und ist ausgebildet, aus den durch die zumindest eine Messvorrichtung erfassten Komponenten (Schadstoffe) des Wasserstoffs einen Anteil bzw. eine Konzentration an Schadstoffen bzw. - gasen in dem Wasserstoff zu bestimmen, den Anteil an Schadstoffen mit einem vorbestimmten Grenzwert zu vergleichen und bei einem Überschreiten des Anteils an Schadstoffen in dem Wasserstoff ein Melde-Signal über die Kommunikationsschnittstelle zu senden. Das Melde-Signal kann beispielsweise an ein übergeordnetes System oder andere Steuergeräte gesendet werden.

Zusätzlich kann die Tank-Kontroll-Einheit weitere Funktionen bei der Steuerung des Wasserstoffspeichers und/oder der Steuerung eines Tankvorgangs bei der Betankung des Wasserstoffspeichers übernehmen.

Die Tank-Kontroll-Einheit kann beispielsweise Ventile zur Druckreduktion in dem Wasserstoffspeicher bzw. einer Vorrichtung zur Druckreduktion, eine Vorrichtung zur Füllstandsüberwachung des Wasserstoffspeichers, Messvorrichtungen zur Ermittlung und darauf basierenden Überwachung der Temperatur und des Druck in dem Wasserstoffspeicher und/oder Schaltvorrichtungen mit zugehörigen Ventilen zur Sicherheitsabschaltung und Entleerung des Wasserstoffspeichers im Notfall, wie z.B. einem Unfall aufweisen.

Weiter ist möglich, dass die Tank-Kontroll-Einheit zumindest eine zusätzliche Schadstoff-Messvorrichtung zur Ermittlung und Überwachung der Schadstoffe in dem Wasserstoff bzw. der Anteile der Schadstoffe an dem Wasserstoff in einem von Wasserstoff durchströmten Wasserstoffsystem des Brennstoffzellensystems aufweist.

Des Weiteren kann die Tank-Kontroll-Einheit die Wasserstoffqualität bei einem Betankungsvorgang des Wasserstoffspeichers überwachen. Sollten die Parameter des bei dem Betankungsvorgang dem Wasserstoffspeicher zugeführten Wasserstoffs, welche die Wasserstoffqualität bestimmen und zu welchen auch der Anteil der Schadstoffe an dem Wasserstoff gehören, außerhalb vorgegebener Grenzwerte liegen, kann dies von der Tank-Kontroll-Einheit erfasst und der Betankungs- bzw. Tankvorgang gesteuert und insbesondere gestoppt werden.

Zudem kann aus den durch die Tank-Kontroll-Einheit gewonnen Messwerten der Schadstoffe bzw. den daraus ermittelten Konzentrationen von Schadstoffen in dem Wasserstoff die Steuerung des Wasserstoffspeichers beeinflusst werden, so dass beispielsweise ein Spülvorgang, welcher auch als "Purgen" bezeichnet werden kann, gezielt bei einem Überschreiten von Grenzwerten eingeleitet werden kann, so dass dadurch Schadgase zum Schutz des Wasserstoffspeichers und insbesondere zum Schutz der Brennstoffzellen des Brennstoffzellensystems aus dem Wasserstoffspeicher abgeleitet werden.

Die Tank-Kontroll-Einheit kann zudem durch die integrierte Kommunikationsschnittstelle die Kommunikation mit der Tankstelle bzw. einem Tanksystem während des Betankungsvorgangs übernehmen.

Wie zuvor erwähnt, kann die Tank-Kontroll-Einheit einen einzelnen Tank eines Wasserstoffspeichers oder mehrere Tanks eines Wasserstoffspeichers überwachen.

Die Tank-Kontroll-Einheit bildet dadurch eine skalierbare Lösung zur Überwachung/Steuerung/Regulierung eines Wasserstoffs, welche auch von der Größe des Wasserstoffspeichers bzw. der Anzahl der Tanks, welche der Wasserstoffspeicher umfasst, abhängig gemacht werden kann.

Durch die erfindungsgemäße Lösung können die Steuerungsverfahren bzw. das Vorgehen zum Purgen verbessert und der Wasserstoffverbrauch optimiert werden, so dass sich eine effizientere Wasserstoff-Nutzung und damit ein niedriger Verbrauch des Brennstoffzellensystems ergibt.

Wird die Tank-Kontroll-Einheit bei einem Fahrzeug verwendet, ergibt sich dadurch eine Erhöhung der Reichweite.

Zugleich kann durch den Schutz der Brennstoffzellen des Brennstoffzellensystems vor Schadstoffen bzw. -gasen eine längere Lebensdauer und eine energetische Optimierung des Gesamtsystems erzielt werden.

Bei einer vorteilhaften Weiterbildung der Tank-Kontroll-Einheit weist diese zumindest ein Sperrventil auf, durch das eine Strömung des Wasserstoffs in den Wasserstoffspeicher und/oder aus dem Wasserstoffspeicher sperr- also unterbindbar ist. Entsprechend kann auch ein erstes Sperrventil zur Sperrung der Strömung des Wasserstoffs in den Wasserstoffspeicher und ein zweites Sperrventil zur Sperrung der Strömung des Wasserstoffs aus dem Wasserstoffspeicher vorgesehen sein. Hierbei ist die Auswerteeinheit ausgebildet, das zumindest eine Sperrventil bei dem Überschreiten des Anteils an Schadstoffen in dem Wasserstoff direkt und/oder über die Kommunikationsschnittstelle die Strömung sperrend anzusteuern. Die Ansteuerung kann dabei auch über zwischengeschaltete Stellen, wie beispielsweise Steuergeräte, mittels des Melde-Signals erfolgen.

Weiter sieht eine ebenfalls vorteilhafte Variante der Tank-Kontroll-Einheit vor, dass diese zumindest ein Purge-Ventil aufweist, welches auch als Ablass-Ventil bezeichnet werden kann. Durch dieses kann ein in dem Wasserstoffspeicher gesammelter bzw. vorhandener Schadstoff aus dem Wasserstoffspeicher abgelassen werden. Hierbei ist die Auswerteeinheit ausgebildet, das zumindest eine Purge-Ventil bei dem Überschreiten des Anteils an Schadstoffen in dem Wasserstoff direkt und/oder über die Kommunikationsschnittstelle den Schadstoff bzw. die Schadstoffe aus dem Wasserstoffspeicher ablassend anzusteuern. Wie auch bei dem Sperrventil kann die Ansteuerung über zwischengeschaltete Stellen, wie weitere Steuergeräte, und mittels des Melde-Signals erfolgen. Vorzugsweise ist dabei ein Purge-Ventil je Tank des Wasserstoffspeichers vorgesehen, wobei jeweils ein Purge-Ventil zum "Purgen" jeweils eines Tanks verwendbar ist, so dass die Tanks auch unabhängig voneinander bzw. einzeln gespült werden können.

Erfindungsgemäß ist die Kommunikationsschnittstelle ausgebildet, bei einem Tank- bzw. Betankungsvorgang, bei welchem ein Tanksystem zumindest vorübergehend mit dem Wasserstoffspeicher strömungstechnisch verbunden ist, so dass Wasserstoff aus dem Tanksystem in den Wasserstoffspeicher einströmen kann, mit dem Tanksystem zu kommunizieren. Mittels der Kommunikation, welche optional über das Melde-Signal erfolgen kann, kann das Tanksystem dabei auch direkt durch die Tank-Kontroll-Einheit gesteuert werden.

Hierbei ist ferner vorgesehen, dass die Kommunikationsschnittstelle ausgebildet ist, drahtlos und insbesondere über Infrarot mit dem Tanksystem zu kommunizieren. Ein Sender und/oder ein Empfänger ist hierfür unmittelbar in einen Tankstutzen zur Verbindung des Wasserstoffspeichers mit dem Tanksystem integriert.

Wie zuvor erwähnt, kann die Tank-Kontroll-Einheit auch weitere Überwachungsfunktionen an oder in dem Wasserstoffspeicher übernehmen. Hierfür weist die Tank-Kontroll-Einheit gemäß einer vorteilhaften Ausgestaltung zumindest eine Druck-Messvorrichtung zur Erfassung eines Drucks des in dem Wasserstoffspeicher gespeicherten und/oder in den Wasserstoffspeicher einströmenden und/oder aus dem Wasserstoffspeicher ausströmenden Wasserstoffs auf. Zusätzlich oder alternativ, kann die Tank-Kontroll-Einheit zumindest eine Temperatur-Messvorrichtung zur Erfassung einer Temperatur des in dem Wasserstoffspeicher gespeicherten und/oder in den Wasserstoffspeicher einströmenden und/oder aus dem Wasserstoffspeicher ausströmenden Wasserstoffs aufweisen.

Insbesondere kann die Tank-Kontroll-Einheit einen Hochdrucksensor als erste Druck-Messvorrichtung in einem Hochdruckbereich des Wasserstoffspeichers, einen Tiefdrucksensor als zweite Druck-Messvorrichtung in einem Tiefdruckbereich des Wasserstoffspeichers und einen Tank-DruckSensor als dritte Druck-Messvorrichtung für jeweils einen Tank des Wasserstoffspeichers vorsehen. Der Hochdrucksensor und der Tiefdrucksensor sind hierbei insbesondere in eine Vorrichtung zur Druckreduktion integriert, in welcher der in dem Wasserstoffspeicher bzw. genauer in dem Tank unter Hochdruck gespeicherte Wasserstoff von dem Hochdruck auf den Tiefdruck reduziert wird, bevor er aus dem Wasserstoffspeicher ausströmt.

Ein weiterer Aspekt der Erfindung betrifft hierbei ein Wasserstoffspeichersystem mit einem Wasserstoffspeicher und einer erfindungsgemäßen Tank-Kontroll-Einheit. Der Wasserstoffspeicher kann dabei einen Tank oder mehrere Tanks zur Speicherung des Wasserstoffs aufweisen.

Neben der Tank-Kontroll-Einheit und dem Wasserstoffspeichersystem betrifft ein Aspekt der Erfindung zudem ein Verfahren zur Steuerung einer erfindungsgemäßen Tank-Kontroll-Einheit. Gemäß dieses Verfahrens vergleicht die Auswerteeinheit kontinuierlich oder intervallweise den Anteil an Schadstoffen bzw. deren Konzentration in dem Wasserstoff mit dem vorbestimmten Grenzwert und sendet bei dem Überschreiten des Anteils bzw. der Konzentration an Schadstoffen in dem Wasserstoff das Melde-Signal über die Kommunikationsschnittstelle.

Ebenfalls vorteilhaft ist eine Weiterbildung des Verfahrens, bei welchem die Auswerteeinheit bei dem Überschreiten des Anteils an Schadstoffen in dem Wasserstoff und insbesondere in dem in den Wasserstoffspeicher einströmenden oder des aus dem Wasserstoffspeicher ausströmenden Wasserstoff das zumindest eine Sperrventil, wie es zuvor erläutert wurde, ansteuert und die Strömung des Wasserstoffs in den Wasserstoffspeicher und/oder aus dem Wasserstoffspeicher sperrt.

Weiter ist eine Variante des Verfahrens von Vorteil, bei welcher die Auswerteeinheit bei dem Überschreiten des Anteils an Schadstoffen in dem Wasserstoff und insbesondere in dem in den Wasserstoffspeicher einströmenden oder des aus dem Wasserstoffspeicher ausströmenden Wasserstoff das zumindest eine Purge-Ventil, wie es zuvor erläutert wurde, ansteuert und den Schadstoff bzw. die Schadstoffe aus dem Wasserstoffspeicher ablässt.

Zudem kann auch eine Variante vorgesehen sein, bei welcher die Auswerteeinheit bei dem Überschreiten des Anteils an Schadstoffen in dem Wasserstoff und insbesondere in dem in dem Wasserstoffsystem einer Brennstoffzelle strömenden Wasserstoff ein zugehöriges Ventil ansteuert, so dass der Schadstoff bzw. die Schadstoffe aus dem Wasserstoffsystem der Brennstoffzelle abgelassen werden können.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Tank-Kontroll-Einheit;
- Fig. 2: Ablauf einer Initialisierung der Tank-Kontroll-Einheit;
- Fig. 3: Ablauf eines Normalbetriebs der Tank-Kontroll-Einheit.

Die Figuren sind beispielhaft schematisch.

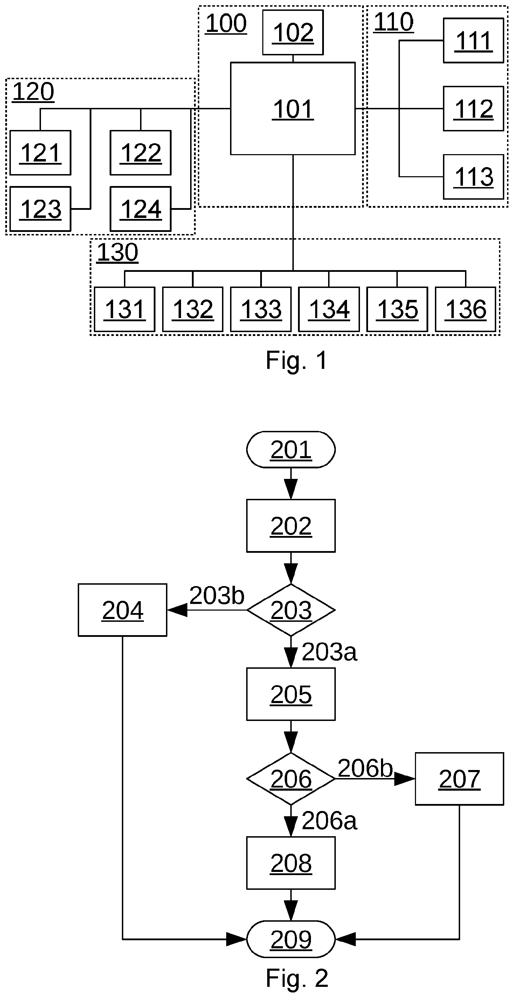

In Figur 1 ist ein beispielhafter Aufbau einer Tank-Kontroll-Einheit gezeigt. Zentrales Kernstück der Tank-Kontroll-Einheit ist die Auswerteeinheit 100, welche ein Steuergerät 101 sowie einen optionalen Temperatursensor 102 zur Erfassung der Temperatur des Steuergeräts 101 und/oder einer an das Steuergerät 101 angrenzenden Umgebung aufweist. In das Steuergerät 101 ist zudem die Kommunikationsschnittstelle integriert, über welche die Auswerteeinheit 100 mit nicht zu der Tank-Kontroll-Einheit gehörenden Systemen 110 und Unterbaugruppen 120, 130 der Tank-Kontroll-Einheit kommunizieren kann.

Dabei werden insbesondere Daten aus den Unterbaugruppen 120, 130, wie beispielsweise Messwerte von Messvorrichtungen, in der Auswerteeinheit 100 und genauer in dem Steuergerät 101 ausgewertet und entsprechend eines in dem Steuergerät 101 implementierten Verfahrens an nicht zu der Tank-Kontroll-Einheit gehörende Systeme 110 weitergeleitet oder in die Unterbaugruppen 120, 130 der Tank-Kontroll-Einheit integrierte Aktoren, insbesondere Ventile, gesteuert.

Vorliegend kommuniziert die Tank-Kontroll-Einheit über die in das Steuergerät 101 integrierte Kommunikationsschnittstelle zumindest während eines Betankungsvorganges mit einem Tanksystem 111. Ferner kommuniziert die Tank-Kontroll-Einheit mit einem Brennstoffzellen-Management System 112, welches die Brennstoffzellen eines Brennstoffzellensystems steuert, sowie mit weiteren Fahrzeugsteuergeräten bzw. allgemein mit einem Fahrzeugbussystem 113.

Eine erste Unterbaugruppe 120 der Tank-Kontroll-Einheit ist in eine Vorrichtung zur Druckreduktion des in dem Wasserstoffspeicher unter Hochdruck stehenden Wasserstoffs integriert. Dabei sieht die Unterbaugruppe 120 einen Hochdrucksensor 123 als Messvorrichtung zur Erfassung des Drucks des Wasserstoffs in einem Hochdruckbereich der Vorrichtung und einen Tiefdrucksensor 124 als Messvorrichtung zur Erfassung des Drucks des Wasserstoffs in einem Tiefdruckbereich der Vorrichtung vor, welche jeweils mit der Auswerteeinheit 100 signaltechnisch verbunden sind und die jeweils erfassten Werte an die Auswerteeinheit 100 übermitteln. Ferner sind in der ersten Unterbaugruppe 120 ein Hochdruckventil 121 zur Sperrung und/oder Steuerung der Strömung des Wasserstoffs in den Hochdruckbereich der Vorrichtung und ein Tiefdruckventil 122 zur Sperrung und/oder Steuerung der Strömung des Wasserstoffs aus dem Tiefdruckbereich der Vorrichtung vorgesehen, welche jeweils ebenfalls signaltechnisch mit der Auswerteeinheit 100 verbunden und durch diese ansteuerbar sind, so dass in einem Fehlerfall oder falls eine zu hohe Konzentration an Schadstoffen in der Vorrichtung oder dem Wasserstoffspeicher gemessen wird, die Strömung von Wasserstoff in und/oder aus der Vorrichtung zur Druckreduktion gesperrt werden kann.

Durch die zweite Unterbaugruppe 130 wird die Überwachung des Wasserstoffspeichers bzw. eines Tanks des Wasserstoffspeichers realisiert. Hierfür verfügt die zweite Unterbaugruppe 130 über einen Temperatursensor als Temperatur-Messvorrichtung 131, einen Drucksensor als Druck-Messvorrichtung 132, einen Volumen bzw. Füllstandssensor 133 zur Erfassung des Füllstands des Tanks mit Wasserstoff, ein erstes als Sicherheitsventil des Tanks fungierendes Sperrventil 134 und ein zweites als Tank-Ventil zur Sperrung einer Strömung von Wasserstoff in den Tank bei dem Betankungsvorgang fungierendes Sperrventil 135. Weiter ist ein Purge-Ventil 136 vorgesehen, durch welches der Tank gespült werden kann.

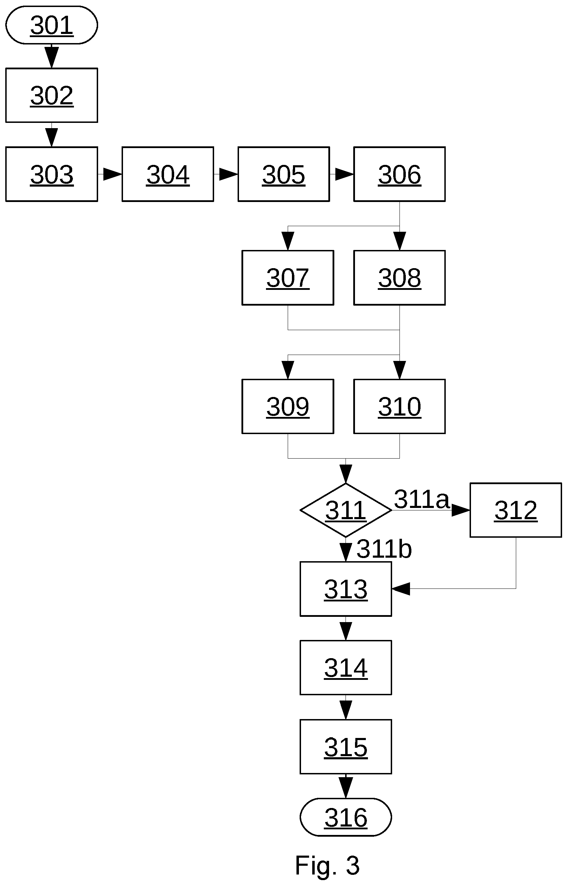

Figur 2 gibt den Ablauf eines Starts bzw. einer Initialisierung der in Figur 1 dargestellten Tank-Kontroll-Einheit wieder und umfasst als vereinfachtes Ablaufdiagramm die folgenden Schritte bzw. Übergangsbedingungen:
- 201: Start des Ablaufs bzw. der Initialisierung
- 202: Funktionsprüfung aller an die Auswerteeinheit 100 angeschlossenen Messvorrichtungen und Ventile
- 203: Sind alle an die Auswerteeinheit 100 angeschlossenen Messvorrichtungen und Ventile funktionsfähig?
203a Falls Ja, dann weiter zu 205
203b Falls Nein, dann Weiter zu 204
- 204: Ausgabe einer entsprechenden Fehlermeldung an ein übergeordnetes System, wie beispielsweise das Brennstoffzellen-Management System 112
- 205: Erfassung des Füllstands des Tanks des Wasserstoffspeichers mit dem Füllstandssensor 133
- 206: Ist der Füllstand oberhalb einem Mindestfüllstand von z.B. 10%?
206a Falls Ja, dann weiter zu 208
206b Falls Nein, dann weiter zu 207
- 207: Ausgabe einer entsprechenden Fehlermeldung an ein übergeordnetes System, wie beispielsweise das Brennstoffzellen-Management System 112
- 208: Durchführung bzw. Start des Normalbetriebs gemäß Figur 3
- 209: Ende der Initialisierung der Tank-Kontroll-Einheit

Figur 3 gibt den Ablauf eines Normalbetriebs der in Figur 1 dargestellten Tank-Kontroll-Einheit wieder, welcher auf die in Figur 2 gezeigte Initialisierung folgen kann. Der Normalbetrieb bzw. der zu diesem gehörende Ablauf umfasst als vereinfachtes Ablaufdiagramm die folgenden Schritte bzw. Übergangsbedingungen:
- 301: Start des Normalbetriebs
- 302: Warten auf eine Anforderung des Wasserstoffs durch eine Brennstoffzelle des Brennstoffzellensystems, wobei die Anforderung insbesondere durch das Brennstoffzellen-Management System 112 an die Auswerteeinheit 100 übermittelt werden kann
- 303: Öffnen des Hochdruckventils 121
- 304: Entspannen des in die Vorrichtung zur Druckreduktion einfließenden und unter Hochdruck stehenden Wasserstoffs auf einen als Systemdruck bezeichenbaren Tiefdruck
- 305: Öffnen des Tiefdruckventils 122
- 306: Bereitstellen des aus der Vorrichtung zur Druckreduktion fließenden Wasserstoffs an die Brennstoffzelle
- 307: Erfassung der Parameter des aus dem Tank des Wasserstoffspeichers in die Vorrichtung zur Druckreduktion einströmenden Wasserstoffs mittels zumindest der Temperatur-Messvorrichtung 131 und der Druck-Messvorrichtung 132
- 308: Erfassung der Schadstoffe in dem aus dem Tank des Wasserstoffspeichers in die Vorrichtung zur Druckreduktion einströmenden Wasserstoffs mittels zumindest einer Messvorrichtung zur Erfassung vorbestimmter Komponenten des Wasserstoffs
- 309: Betrieb der Brennstoffzelle mittels des aus dem Tank über die Vorrichtung zur Druckreduktion strömenden Wasserstoffs
- 310: Erfassung der Parameter des in dem Wasserstoffsystem des die Brennstoffzelle aufweisenden Brennstoffzellensystems strömenden Wasserstoffs, beispielsweise mittels weiterer Druck- und Temperatur-Messvorrichtungen sowie vorzugsweise Erfassung der Schadstoffe in dem das Wasserstoffsystem durchströmenden Wasserstoffs mittels zumindest einer weiteren Messvorrichtung zur Erfassung vorbestimmter Komponenten des Wasserstoffs
- 311: Übersteigt die Konzentration der Schadstoffe einen vorbestimmten Grenzwert?
311a Falls Ja, dann weiter zu 312
311b Falls Nein, dann weiter zu 313
- 312: "Purgen" des Tanks des Wasserstoffspeichers und/oder des Wasserstoffsystems des Brennstoffzellensystems mittels des Purge-Ventils 136
- 313: Speichern bzw. Einlagern des durch die Brennstoffzelle verbrauchten Wasserstoffs
- 314: Warten auf ein Ende der Anforderung von Wasserstoff
- 315: Schließen des Hochdruckventils 121 und des Tiefdruckventils 122
- 316: Ende des Ablaufs bzw. des Normalbetriebs

## Patentansprüche

1. Tank-Kontroll-Einheit eines Wasserstoffspeichers für ein Brennstoffzellensystem,
wobei die Tank-Kontroll-Einheit einen Tankstutzen und eine Auswerteeinheit (100) und zumindest eine Messvorrichtung zur Erfassung vorbestimmter Komponenten eines in dem Wasserstoffspeicher gespeicherten und/oder in den Wasserstoffspeicher einströmenden und/oder aus dem Wasserstoffspeicher ausströmenden Wasserstoffs aufweist,
wobei die Auswerteeinheit (100) eine Kommunikationsschnittstelle aufweist und ausgebildet ist, aus den durch die zumindest eine Messvorrichtung erfassten Komponenten des Wasserstoffs einen Anteil an Schadstoffen in dem Wasserstoff zu bestimmen, den Anteil an Schadstoffen mit einem vorbestimmten Grenzwert zu vergleichen und bei einem Überschreiten des Anteils an Schadstoffen in dem Wasserstoff ein Melde-Signal über die Kommunikationsschnittstelle zu senden,
wobei die Kommunikationsschnittstelle ausgebildet ist, bei einem Tankvorgang, bei welchem ein Tanksystem (111) mit dem Wasserstoffspeicher strömungstechnisch verbunden ist, so dass Wasserstoff aus dem Tanksystem (111) in den Wasserstoffspeicher einströmen kann, mit dem Tanksystem (111) zu kommunizieren,
wobei die Kommunikationsschnittstelle ausgebildet ist, drahtlos und insbesondere über Infrarot mit dem Tanksystem (111) zu kommunizieren, **dadurch gekennzeichnet, dass** ein Sender und/oder ein Empfänger der Kommunikationsschnittstelle unmittelbar in den Tankstutzen integriert ist.

2. Tank-Kontroll-Einheit nach Anspruch 1
aufweisend zumindest ein Sperrventil (134, 135), durch das eine Strömung des Wasserstoffs in den Wasserstoffspeicher und/oder aus dem Wasserstoffspeicher sperrbar ist,
wobei die Auswerteeinheit (100) ausgebildet ist, das zumindest eine Sperrventil (134, 135) bei dem Überschreiten des Anteils an Schadstoffen in dem Wasserstoff direkt und/oder über die Kommunikationsschnittstelle die Strömung sperrend anzusteuern.

3. Tank-Kontroll-Einheit nach Anspruch 1 oder 2
aufweisend zumindest ein Purge-Ventil (136), durch das ein in dem Wasserstoffspeicher gesammelter Schadstoff aus dem Wasserstoffspeicher ablassbar ist,
wobei die Auswerteeinheit (100) ausgebildet ist, das zumindest eine Purge-Ventil (136) bei dem Überschreiten des Anteils an Schadstoffen in dem Wasserstoff direkt und/oder über die Kommunikationsschnittstelle den Schadstoff aus dem Wasserstoffspeicher ablassend anzusteuern.

4. Tank-Kontroll-Einheit nach einem der vorhergehenden Ansprüche
aufweisend zumindest eine Druck-Messvorrichtung (123, 124, 132) zur Erfassung eines Drucks des in dem Wasserstoffspeicher gespeicherten und/oder in den Wasserstoffspeicher einströmenden und/oder aus dem Wasserstoffspeicher ausströmenden Wasserstoffs
und/oder aufweisend zumindest eine Temperatur-Messvorrichtung (131) zur Erfassung einer Temperatur des in dem Wasserstoffspeicher gespeicherten und/oder in den Wasserstoffspeicher einströmenden und/oder aus dem Wasserstoffspeicher ausströmenden Wasserstoffs.

5. Wasserstoffspeichersystem mit einem Wasserstoffspeicher und einer Tank-Kontroll-Einheit gemäß einem der vorhergehenden Ansprüche.

6. Verfahren zur Steuerung einer Tank-Kontroll-Einheit gemäß einem der vorhergehenden Ansprüche 1 bis 4,
wobei die Auswerteeinheit (100) kontinuierlich oder intervallweise den Anteil an Schadstoffen mit dem vorbestimmten Grenzwert vergleicht und bei dem Überschreiten des Anteils an Schadstoffen in dem Wasserstoff das Melde-Signal über die Kommunikationsschnittstelle sendet.

7. Verfahren nach dem vorhergehenden Anspruch,
wobei die Auswerteeinheit (100) bei dem Überschreiten des Anteils an Schadstoffen in dem Wasserstoff das zumindest eine Sperrventil (134, 135) gemäß Anspruch 2 ansteuert und die Strömung des Wasserstoffs in den Wasserstoffspeicher und/oder aus dem Wasserstoffspeicher sperrt.

8. Verfahren nach dem vorhergehenden Anspruch 6 oder 7,
wobei die Auswerteeinheit (100) bei dem Überschreiten des Anteils an Schadstoffen in dem Wasserstoff das zumindest eine Purge-Ventil (136) gemäß Anspruch 3 ansteuert und den Schadstoff aus dem Wasserstoffspeicher ablässt.

## Claims

1. A tank control unit of a hydrogen reservoir for a fuel cell system,
wherein the tank control unit comprises a tank nozzle and an evaluation unit (100) and at least one measuring device for detecting predetermined components of hydrogen stored in the hydrogen reservoir and/or flowing into the hydrogen reservoir and/or flowing out of the hydrogen reservoir,
wherein the evaluation unit (100) has a communications interface and is designed to determine a proportion of pollutants in the hydrogen from the components of the hydrogen detected by at least one measuring device, to compare the proportion of pollutants with a predetermined limit value, and to send a notification signal via the communications interface if the proportion of pollutants in the hydrogen is exceeded,
wherein the communications interface is designed to communicate with the tank system (111) during a refueling process in which a tank system (111) is fluidically connected to the hydrogen reservoir, so that hydrogen can flow from the tank system (111) into the hydrogen reservoir,
wherein the communications interface is designed to communicate wirelessly and in particular via infrared with the tank system (111),
**characterized in that** a transmitter and/or a receiver of the communications interface is integrated directly into the tank nozzle.

2. The tank control unit according to claim 1
comprising at least one shut-off valve (134, 135) through which a flow of the hydrogen into and/or out of the hydrogen reservoir can be blocked,
wherein the evaluation unit (100) is designed to control at least one shut-off valve (134, 135) in order to block the flow directly and/or via the communications interface when the proportion of pollutants in the hydrogen is exceeded.

3. The tank control unit according to claim 1 or 2
comprising at least one purge valve (136) through which a pollutant collected in the hydrogen reservoir can be discharged from the hydrogen reservoir,
wherein the evaluation unit (100) is designed to control at least one purge valve (136) in order to release the pollutant from the hydrogen reservoir directly and/or via the communications interface when the proportion of pollutants in the hydrogen is exceeded.

4. The tank control unit according to any one of the preceding claims
comprising at least one pressure measuring device (123, 124, 132) for detecting a pressure of the hydrogen stored in the hydrogen reservoir and/or flowing into the hydrogen reservoir and/or flowing out of the hydrogen reservoir
and/or comprising at least one temperature measuring device (131) for detecting a temperature of the hydrogen stored in the hydrogen reservoir and/or flowing into the hydrogen reservoir and/or flowing out of the hydrogen reservoir.

5. A hydrogen reservoir system with a hydrogen reservoir and a tank control unit according to any one of the preceding claims.

6. A method for controlling a tank control unit according to any one of preceding claims 1 to 4,
wherein the evaluation unit (100), continuously or at intervals, compares the proportion of pollutants with the predetermined limit value and, if the proportion of pollutants in the hydrogen is exceeded, sends the notification signal via the communications interface.

7. The method according to the preceding claim,
wherein, if the proportion of pollutants in hydrogen is exceeded, the evaluation unit (100) activates at least one shut-off valve (134, 135) according to claim 2 and blocks the flow of hydrogen into the hydrogen reservoir and/or out of the hydrogen reservoir.

8. The method according to preceding claim 6 or 7,
wherein, if the proportion of pollutants in the hydrogen is exceeded, the evaluation unit (100) activates the at least one purge valve (136) according to claim 3 and releases the pollutant from the hydrogen reservoir.

## Revendications

1. Unité de contrôle de réservoir d'un réservoir d'hydrogène pour un système de pile à combustible,
dans laquelle l'unité de contrôle de réservoir présente une tubulure de remplissage et une unité d'évaluation (100) et au moins un dispositif de mesure pour détecter des composants prédéterminés d'hydrogène stocké dans le réservoir d'hydrogène et/ou entrant dans le réservoir d'hydrogène et/ou sortant du réservoir d'hydrogène,
dans laquelle l'unité d'évaluation (100) présente une interface de communication et est réalisée pour déterminer parmi les composants de l'hydrogène, détectés par ledit au moins un dispositif de mesure, une part de contaminants dans l'hydrogène, pour comparer la part de contaminants avec une valeur limite prédéterminée, et pour envoyer un signal d'avertissement par l'intermédiaire de l'interface de communication en cas de dépassement de la part de contaminants dans l'hydrogène,
dans laquelle l'interface de communication est réalisée pour communiquer avec le système de réservoir (111) lors d'un processus de remplissage dans lequel un système de réservoir (111) est relié fluidiquement au réservoir d'hydrogène de sorte que l'hydrogène peut entrer du système de réservoir (111) dans le réservoir d'hydrogène,
dans laquelle l'interface de communication est réalisée pour communiquer sans fil et en particulier par infrarouge avec le système de réservoir (111),
**caractérisée en ce qu'**un émetteur et/ou un récepteur de l'interface de communication sont intégrés directement dans la tubulure de remplissage.

2. Unité de contrôle de réservoir selon la revendication 1,
présentant au moins une vanne d'arrêt (134, 135) à travers laquelle un écoulement de l'hydrogène dans le réservoir d'hydrogène et/ou hors du réservoir d'hydrogène peut être arrêté,
dans laquelle, en cas de dépassement de la part de contaminants dans l'hydrogène, l'unité d'évaluation (100) est réalisée pour piloter directement et/ou par l'intermédiaire de l'interface de communication ladite au moins une vanne d'arrêt (134, 135) de manière bloquante.

3. Unité de contrôle de réservoir selon la revendication 1 ou 2,
présentant au moins une vanne de purge (136) qui permet d'évacuer du réservoir d'hydrogène un contaminant collecté dans le réservoir d'hydrogène,
dans laquelle, en cas de dépassement de la part de contaminants dans l'hydrogène, l'unité d'évaluation (100) est réalisée pour piloter directement et/ou par l'intermédiaire de l'interface de communication ladite au moins une vanne de purge (136) en évacuant le contaminant du réservoir d'hydrogène.

4. Unité de contrôle de réservoir selon l'une quelconque des revendications précédentes,
présentant au moins un dispositif de mesure de pression (123, 124, 132) pour détecter une pression de l'hydrogène stocké dans le réservoir d'hydrogène et/ou entrant dans le réservoir d'hydrogène et/ou sortant du réservoir d'hydrogène,
et/ou présentant au moins un dispositif de mesure de température (131) pour détecter une température de l'hydrogène stocké dans le réservoir d'hydrogène et/ou entrant dans le réservoir d'hydrogène et/ou sortant du réservoir d'hydrogène.

5. Système de réservoir d'hydrogène comprenant un réservoir d'hydrogène et une unité de contrôle de réservoir selon l'une quelconque des revendications précédentes.

6. Procédé de commande d'une unité de contrôle de réservoir selon l'une quelconque des revendications précédentes 1 à 4,
dans lequel l'unité d'évaluation (100) compare en continu ou par intervalles la part de contaminants avec la valeur limite prédéterminée, et envoie le signal d'avertissement par l'intermédiaire de l'interface de communication en cas de dépassement de la part de contaminants dans l'hydrogène.

7. Procédé selon la revendication précédente,
dans laquelle, en cas de dépassement de la part de contaminants dans l'hydrogène, l'unité d'évaluation (100) pilote ladite au moins une vanne d'arrêt (134, 135) selon la revendication 2 et arrête l'écoulement de l'hydrogène dans le réservoir d'hydrogène et/ou hors du réservoir d'hydrogène.

8. Procédé selon la revendication précédente 6 ou 7,
dans laquelle, en cas de dépassement de la part de contaminants dans l'hydrogène, l'unité d'évaluation (100) pilote ladite au moins une vanne de purge (136) selon la revendication 3 et évacue le contaminant du réservoir d'hydrogène.
